# EUROPEAN PATENT APPLICATION

(11) **EP 4 625 513 A1**
(43) Date of publication of application: **01.10.2025**
(21) Application number: 25166998.2
(22) Date of filing: 28.03.2025
(51) Int. Cl.: H01M 4/04, H01M 4/133, H01M 4/1393, H01M 4/587, H01M 4/62, H01M 10/0525, H01M 4/02

(54) **NEGATIVE ELECTRODE, PREPARATION METHOD THEREFOR, BATTERY, AND ELECTRICAL DEVICE**

(30) Priority: 29.03.2024 CN 202410382797
(71) Applicant: BYD Company Limited, Shenzhen, Guangdong 518118 (CN)
(72) Inventor: HE, Kefeng, Shenzhen 518118 (CN); LEI, Yu, Shenzhen 518118 (CN); YUAN, Xiaotao, Shenzhen 518118 (CN); ZHAO, Kexin, Shenzhen 518118 (CN); ZHANG, Bofu, Shenzhen 518118 (CN)
(74) Representative: Mathys & Squire

(57) **Abstract**

A negative electrode includes a negative electrode current collector and a negative electrode active material layer arranged on a surface of the negative electrode current collector, the negative electrode active material layer including graphite, an orientation value of the negative electrode active material layer being less than or equal to 3, and a binding force between the negative electrode current collector and the negative electrode active material layer being greater than or equal to 0.25 N/40 mm. The negative electrode has excellent ion and electron transport capabilities and good internal stability, which is conducive to its use in a battery to improve the charging and discharging rates, the cycling capacity retention rate, and the service life of the battery.

## Description

### FIELD

The present application relates to the field of battery technologies, and specifically to a negative electrode, a preparation method therefor, a battery, and an electrical device.

### BACKGROUND

Graphite materials are widely used in battery negative electrodes due to advantages such as low cost and high energy density. At present, as user demands continue to grow, an increasing number of electronic products require fast-charging capabilities. Therefore, batteries in electronic products need to be studied and improved. However, the layered structure of the graphite material in the negative electrode of the battery is more likely to be arranged parallel to the current collector during the manufacturing process, resulting in unsatisfactory fast charging performance.

### SUMMARY

In view of the above, the present application provides a negative electrode, a preparation method therefor, a battery, and an electrical device. The negative electrode has excellent ion and electron diffusion capabilities and has good internal stability, and helps improve the charging and discharging rates, cycling capacity retention rate, and service life of the battery.

According to a first aspect, the present application provides a negative electrode, including: a negative electrode current collector and a negative electrode active material layer arranged on a surface of the negative electrode current collector, the negative electrode active material layer including graphite, an orientation value of the negative electrode active material layer being less than or equal to 3, and a binding force between the negative electrode current collector and the negative electrode active material layer being greater than or equal to 0.25 N/40 mm.

Optionally, the orientation value of the negative electrode active material layer is between 0.06 and 3.

Optionally, the binding force between the negative electrode current collector and the negative electrode active material layer is between 0.25 N/40 mm and 2.8 N/40 mm.

Optionally, the negative electrode active material layer further includes a conductive agent, and a distribution density of the conductive agent on a side that is away from the negative electrode current collector is less than a distribution density of the conductive agent on a side that is close to the negative electrode current collector.

Further, the distribution density of the conductive agent gradually increases in a direction from the negative electrode active material layer to the negative electrode current collector.

Further, the weight of the conductive agent in the negative electrode active material layer is between 0.1% and 6.7% of the total weight of the negative electrode active material layer.

Optionally, a resistivity of the negative electrode is between 0.1 Ω·cm and 2 Ω·cm.

Optionally, the weight of the graphite in the negative electrode active material layer is greater than or equal to 80% of the total weight of the negative electrode active material layer.

Optionally, a particle diameter D50 of the graphite is between 1 µm and 30 µm.

According to a second aspect, the present application provides a negative electrode preparation method, including: providing a negative electrode current collector, applying a negative electrode slurry containing graphite on at least one surface of the negative electrode current collector, and adjusting an orientation of the graphite in the negative electrode slurry with a magnetic field; and drying to obtain a negative electrode having a negative electrode active material layer with an orientation value of less than or equal to 3, a binding force between the negative electrode current collector and the negative electrode active material layer being greater than or equal to 0.25 N/40 mm.

Optionally, the negative electrode current collector includes a first surface and a second surface opposite to the first surface, the magnetic field is arranged on one side of the first surface and/or the second surface, and an angle between a magnetic moment direction of the magnetic field and the negative electrode current collector is between10° and 90°.

Optionally, the magnetic field undergoes at least one of a reciprocating motion and a rotating motion, and an angle between a movement direction of the reciprocating motion and an extending direction of the negative electrode current collector is between 0° and 90°.

Optionally, an intensity of the magnetic field is between 0.1 T and 2 T.

Optionally, the negative electrode slurry further contains a conductive agent, and the negative electrode current collector is positively charged before drying, to cause a distribution density of the conductive agent on a side that is away from the negative electrode current collector to be less than a distribution density of the conductive agent on a side that is close to the negative electrode current collector.

Optionally, a voltage of the negative electrode current collector is between 0.1 V and 120 V.

Optionally, the drying is performed at a temperature of 40°C to 200°C for 2 min to 60 min.

Optionally, the method further includes rolling after the drying, with a rolling pressure of 2 t to 35 t and a rolling speed of 0.5 m/s to 2 m/s.

According to a third aspect, the present application provides a battery, including a negative electrode according to the first aspect or a negative electrode prepared by the preparation method according to the second aspect, and a positive electrode.

According to a fourth aspect, the present application provides an electrical device, including the battery according to the third aspect.

The orientation degree of graphite in the negative electrode active material layer provided by the present application is low, which is beneficial to improving the ion and electron transport capabilities of the negative electrode. The binding force between the negative electrode current collector and the negative electrode active material layer is good, which is beneficial to improving the stability and reliability of the structure of the negative electrode to adapt to the impact of rapid lithium intercalation or deintercalation on the negative electrode. The negative electrode preparation method is simple and easy to operate, and can achieve industrial production. The charging and discharging rates, the cycling capacity retention rate, and the service life of the battery having the negative electrode are excellent, which is beneficial to the use of battery in an electrical device.

### BRIEF DESCRIPTION OF THE DRAWINGS

FIG. 1 is a schematic cross-sectional view of a negative electrode according to an embodiment of the present application;
FIG. 2 is a flowchart of a negative electrode preparation method according to an embodiment of the present application;
FIG. 3 is a schematic diagram of a negative electrode current collector and a magnetic field according to an embodiment of the present application;
FIG. 4 is a schematic diagram of a negative electrode current collector and a magnetic field according to another embodiment of the present application;
FIG. 5 is a schematic diagram of a negative electrode current collector and a magnetic field according to still another embodiment of the present application;
FIG. 6 is an electron microscope cross-sectional view of a negative electrode prepared in Example 1; and
FIG. 7 is an electron microscope cross-sectional view of a negative electrode prepared in Comparative Example 2.

### DETAILED DESCRIPTION

The technical solutions in the embodiments of the present application are clearly and completely described in the following with reference to the accompanying drawings in the embodiments of the present application. It will be appreciated that, the described embodiments are merely some rather than all of the embodiments of the present application. All other embodiments obtained by a person of ordinary skill in the art based on the embodiments of the present application without making creative efforts shall fall within the protection scope of the present application.

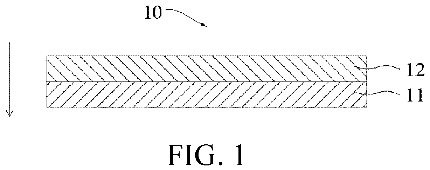

FIG. 1 is a schematic cross-sectional view of a negative electrode according to an embodiment of the present application. The negative electrode 10 includes a negative electrode current collector 11 and a negative electrode active material layer 12 arranged on a surface of the negative electrode current collector 11. The negative electrode active material layer 12 includes graphite. An orientation value of the negative electrode active material layer 12 is less than or equal to 3. A binding force between the negative electrode current collector 11 and the negative electrode active material layer 12 is greater than or equal to 0.25 N/40 mm. It can be understood that the orientation value (OI value) of the negative electrode active material layer 12 is used to represent an orientation index of the graphite in the negative electrode, i.e., the degree of anisotropy of the graphite arrangement in the negative electrode, and the OI value is an area ratio of the (004) characteristic diffraction peak and the (110) characteristic diffraction peak of the negative electrode in an X-ray diffraction (XRD) pattern.

During negative electrode manufacturing processes, coating, rolling, and other processes cause materials with a layered structure (e.g., graphite) to be preferentially oriented, i.e., materials with a layered structure are preferentially aligned in a direction parallel to the fluid collector. Graphite is arranged approximately parallel to the negative electrode current collector, which hinders the transport of ions and electrons, resulting in that the charging and discharging rates of the battery cannot be improved. The degree of orientation of graphite in the present application is low, which is beneficial to the transport of ions and electrons, thereby improving the migration rates of ions and electrons. The swelling caused by ion intercalation can be uniformly dispersed in the negative electrode, which is beneficial to the rate performance and cycle performance of the negative electrode. The binding force between the negative electrode current collector and the negative electrode active material layer is high, which is beneficial to improving the stability of the internal structure of the negative electrode to adapt to the impact of rapid lithium intercalation/deintercalation on the negative electrode. This is conducive to the use of the negative electrode in a battery to improve the charging and discharging rates and the high-rate cycling capacity retention rate of the battery.

In the present application, the use of graphite as the negative electrode active material in the negative electrode ensures and the usage performance of the negative electrode.

In an embodiment of the present application, a particle diameter D50 of the graphite is between 1 µm and 30 µm, which provides a suitable ion migration path, is beneficial to improving the ion and electron transport capabilities and the compaction density, and can reduce side reactions between the graphite and the electrolyte solution during use in the battery, thereby further improving the performance of the negative electrode and the battery. Specifically, the particle diameter D50 of the graphite may be, but is not limited to, 1 µm, 5 µm, 9 µm, 10 µm, 13 µm, 15 µm, 17 µm, 20 µm, 23 µm, 25 µm, 28 µm, 30 µm, etc. In an embodiment of the present application, the particle diameter D50 of the graphite may be between 5 µm and 25 µm. In another embodiment of the present application, the particle diameter D50 of the graphite may be between 7 µm and 22 µm. In still another embodiment of the present application, the particle diameter D50 of the graphite may be between 8 µm and 20 µm, which is beneficial to further improving the electrochemical performance and usage performance of the negative electrode. In still another embodiment of the present application, the particle diameter D50 of the graphite may be between 9 µm and 15 µm. D50 refers to a median particle size of graphite particles, which is obtained by analysis with a laser intensity tester. The graphite includes at least one of artificial graphite or natural graphite.

In the present application, graphite is used as the negative electrode active material in the negative electrode active material layer, and it can be understood that the negative electrode active material in the negative electrode may be only graphite, or may include graphite and other negative electrode active materials. Specifically, the other negative electrode active materials may include, but are not limited to, at least one of a silicon-based material, mesophase microbeads, hard carbon, soft carbon, and the like. In an embodiment of the present application, the weight of the graphite in the negative electrode active material layer is greater than or equal to 80% of the total weight of the negative electrode active material layer, to ensure the orientation of the negative electrode active material in the negative electrode active material layer, thereby further improving the ion and electron transport capabilities and improving the performance of the negative electrode. Specifically, the content in percentage by weight of the graphite in the negative electrode active material layer may be, but is not limited to, 80%, 82%, 85%, 88%, 90%, 91%, 95%, 96%, 96.2%, 96.5%, 96.8%, 97%, 97.3%, 97.5%, 97.9%, 98%, 98.3%, 98.5%, 98.6%, 99%, 99.1%, 99.5%, 99.8%, etc. In an embodiment of the present application, the content in percentage by weight of the graphite in the negative electrode active material layer may be between 80% and 99.9%. In another embodiment of the present application, the content in percentage by weight of the graphite in the negative electrode active material layer may be between 96% and 98%. In still another embodiment of the present application, the content in percentage by weight of the graphite in the negative electrode active material layer may be between 96.5% and 99%. In still another embodiment of the present application, the content in percentage by weight of the graphite in the negative electrode active material layer may be between 97% and 99%. In still another embodiment of the present application, the content in percentage by weight of the graphite in the negative electrode active material layer may be between 80% and 96%. In still another embodiment of the present application, the content in percentage by weight of the graphite in the negative electrode active material layer may be between 85% and 93%. In another embodiment of the present application, when the negative electrode active material in the negative electrode active material layer includes graphite and other negative electrode active materials, the content in percentage by weight of the graphite in the negative electrode active material layer may be greater than or equal to 50%, which is beneficial to improving the migration rates of ions and electrons in the negative electrode active material layer.

In the present application, the orientation value of the negative electrode active material layer 12 is less than or equal to 3, so that the orientation of graphite in the negative electrode active material layer is more conducive to ion and electron transport, to improve the usage performance of the negative electrode. In an embodiment of the present application, the orientation value of the negative electrode active material layer 12 is between 0.06 and 3, so that not only the ion and electron transport capabilities during use of the negative electrode are ensured, but also the difficulty and costs of preparing the negative electrode are reduced, thereby facilitating the commercial application of the negative electrode. Specifically, the orientation value of the negative electrode active material layer 12 may be, but is not limited to, 0.06, 0.09, 0.1, 0.2, 0.5, 0.8, 1, 1.33, 1.5, 1.7, 2, 2.4, 2.5, 2.8, etc. In an embodiment of the present application, the orientation value of the negative electrode active material layer 12 may be between 0.06 and 2.5. In another embodiment of the present application, the orientation value of the negative electrode active material layer 12 may be between 0.09 and 2.5. In still another embodiment of the present application, the orientation value of the negative electrode active material layer 12 may be between 0.09 and 1.33, thereby further improving the ion and electron transport rates of the negative electrode and improving the performance of the negative electrode. In still another embodiment of the present application, the orientation value of the negative electrode active material layer 12 may be between 0.1 and 2.5.

In an embodiment of the present application, the degree of graphitization of graphite is greater than or equal to 60%, so that there are fewer defects in the graphite crystal, the stability of graphite is better, the gram capacity of graphite is improved, and the rapid intercalation/deintercalation of ions is facilitated, thereby improving the cycle performance and energy density of the negative electrode and the battery. Specifically, the degree of graphitization of graphite may be, but is not limited to, 70% or more, 75% or more, 80% or more, 85% or more, 90% or more, 95% or more, etc. The graphitization of graphite can be measured using X-ray diffraction (XRD method). The XRD pattern of the negative electrode is obtained, and based on the pattern, the layer spacing d₀₀₂ of the graphite (002) crystal surface is obtained, which is then calculated by the Mering-Maire formula (also known as the Franklin formula): G = (0.3440 - d002) / (0.3440 - 0.3354) × 100%.

In an embodiment of the present application, the negative electrode active material layer further includes a conductive agent. The addition of the conductive agent in the negative electrode active material layer can improve electrical conductivity, reduce resistivity, accelerate the motion of electrons, increase the migration rate of ions, and improve the charging and discharging efficiency, output power, etc. of the battery.

In an embodiment of the present application, the weight of the conductive agent in the negative electrode active material layer is between 0.1% and 6.7% of the total weight of the negative electrode active material layer, which can not only reduce the resistivity of the negative electrode, but also ensure the liquid absorption amount of the negative electrode active material layer, thereby improving the rate performance of the negative electrode and the battery. Specifically, the content in percentage by weight of the conductive agent in the negative electrode active material layer may be, but is not limited to, 0.1%, 0.5%, 0.7%, 1%, 1.1%, 1.4%, 1.5%, 1.7%, 2.2%, 2.5%, 2.6%, 3%, 3.3%, 3.7%, 4%, 4.2%, 4.5%, 5%, 5.5%, 5.8%, 6%, 6.3%, 6.5%, 6.7%, etc. In an embodiment of the present application, the content in percentage by weight of the conductive agent in the negative electrode active material layer may be between 0.1% and 2%. In another embodiment of the present application, the content in percentage by weight of the conductive agent in the negative electrode active material layer may be between 1% and 3%. In still another embodiment of the present application, the content in percentage by weight of the conductive agent in the negative electrode active material layer may be between 1% and 3.5%. In still another embodiment of the present application, the content in percentage by weight of the conductive agent in the negative electrode active material layer may be between 4% and 6.5%. In the present application, the conductive agent may be a material that can be used in the negative electrode to provide an electrical conduction function in the art. Specifically, the conductive agent may include, but is not limited to, at least one of acetylene black, carbon black, Ketjen black, carbon nanotubes, graphene, carbon nanofibers, and the like.

In an embodiment of the present application, materials in the negative electrode active material layer include graphite and a conductive agent. In another embodiment of the present application, materials in the negative electrode active material layer include graphite, a conductive agent, and an auxiliary agent. The addition of the auxiliary agent further improves the performance of the negative electrode. In an embodiment of the present application, the auxiliary agent includes at least one of a binder and a dispersant. The addition of the binder can increase the binding force inside the negative electrode active material layer and between the negative electrode active material layer and the negative electrode current collector, thereby improving the structural stability of the negative electrode. The addition of the dispersant can improve the dispersion uniformity of the graphite and the conductive agent in the negative electrode active material layer, thereby improving the performance of the negative electrode. In an embodiment, the content in percentage by weight of the binder in the negative electrode active material layer is less than or equal to 2.5%. Specifically, the content in percentage by weight of the binder in the negative electrode active material layer may be, but is not limited to, 0.05%, 0.1%, 0.3%, 0.5%, 0.8%, 1%, 1.4%, 1.5%, 1.7%, 2%, 2.1%, 2.5%, etc. In a specific embodiment, the content in percentage by weight of the binder in the negative electrode active material layer may be between 0.05% and 2.5%. In the present application, the binder may include, but is not limited to, at least one of polytetrafluoroethylene, polyvinylidene fluoride, sodium carboxymethyl cellulose, styrene-butadiene latex, and nitrile rubber. In an embodiment, the content in percentage by weight of the dispersant in the negative electrode active material layer is less than or equal to 2.5%. Specifically, the content in percentage by weight of the dispersant in the negative electrode active material layer may be, but is not limited to, 0.05%, 0.1%, 0.3%, 0.5%, 0.8%, 1%, 1.4%, 1.5%, 1.7%, 2%, 2.1%, 2.5%, etc. In a specific embodiment, the content in percentage by weight of the dispersant in the negative electrode active material layer may be between 0.05% and 2.5%. In the present application, the dispersant may include, but is not limited to, at least one of sodium carboxymethyl cellulose, potassium carboxymethyl cellulose, lithium carboxymethyl cellulose, nanocellulose, and the like.

In an embodiment of the present application, a distribution density of the conductive agent on a side that is away from the negative electrode current collector is less than a distribution density of the conductive agent on a side that is close to the negative electrode current collector. The distribution density of the conductive agent refers to the amount of the conductive agent per unit area. In this way, the negative electrode active material layer on the side close to the negative electrode current collector has higher electrical conductivity, and the usage performance of the negative electrode is further improved. In addition, the higher distribution density of the conductive agent on the side close to the negative electrode current collector is beneficial to increasing the bonding strength between the negative electrode active material layer and the negative electrode current collector and prolonging the cycle life of the battery. The distribution density of the conductive agent can be tested by SEM.

In an embodiment of the present application, the distribution density of the conductive agent gradually increases in a direction from the negative electrode active material layer to the negative electrode current collector. For example, the direction of the negative electrode active material layer to the negative electrode current collector is a direction indicated by an arrow in FIG. 1. In other words, the distribution density of the conductive agent in the region of the negative electrode active material layer close to the negative electrode current collector is high, so the side of the negative electrode active material layer close to one side of the negative electrode current collector has better conductivity, and the usage performance of the negative electrode is further improved.

In an embodiment of the present application, the negative electrode current collector is made of a metal material. The metal material includes at least one of copper, nickel, iron, cobalt, and stainless steel. In a specific embodiment, the negative electrode current collector is a copper foil.

In the present application, a binding force between the negative electrode current collector and the negative electrode active material layer being greater than or equal to 0.25 N/40 mm, so that the negative electrode has good stability. In the present application, a length measured during binding force testing is 40 mm. In an embodiment of the present application, the binding force between the negative electrode current collector and the negative electrode active material layer is between 0.25 N/40 mm and 2.8 N/40 mm, so that the stability and reliability of the interior of the negative electrode are high, thereby improving the cycle performance of the negative electrode. Specifically, the bonding force between the negative electrode current collector and the negative electrode active material layer may be, but is not limited to, 0.25 N/40 mm, 0.3 N/40 mm, 0.5 N/40 mm, 0.8 N/40 mm, 1 N/40 mm, 1.2 N/40 mm, 1.4 N/40 mm, 1.5 N/40 mm, 1.6 N/40 mm, 1.7 N/40 mm, 1.8 N/40 mm, 1.9 N/40 mm, 2 N/40 mm, 2.1 N/40 mm, 2.2 N/40 mm, 2.3 N/40 mm, 2.4 N/40 mm, 2.5 N/40 mm, 2.6 N/40 mm, 2.7 N/40 mm, or 2.8 N/40 mm, etc. In an embodiment of the present application, the bonding force between the negative electrode current collector and the negative electrode active material layer is between 0.25 N/40 mm and 2.2 N/40 mm, so that the bonding force between the negative electrode current collector and the negative electrode active material layer is high and the preparation is convenient. In another embodiment of the present application, the bonding force between the negative electrode current collector and the negative electrode active material layer is between 0.3 N/40 mm and 2.2 N/40 mm. In still another embodiment of the present application, the bonding force between the negative electrode current collector and the negative electrode active material layer is between 0.8 N/40 mm and 1.3 N/40 mm. In still another embodiment of the present application, the bonding force between the negative electrode current collector and the negative electrode active material layer is between 0.25 N/40 mm and 1.8 N/40 mm. In still another embodiment of the present application, the bonding force between the negative electrode current collector and the negative electrode active material layer is between 1 N/40 mm and 2.5 N/40 mm.

In an embodiment of the present application, a resistivity of the negative electrode is between 0.1 Ω·cm and 2 Ω·cm. In the present application, the orientation value of the negative electrode active material layer 12 is low, and an orderly orientation transport channel can be formed, to facilitate the transport of ions and electrons, reduce the ion transfer impedance, and reduce the resistivity of the negative electrode, thereby facilitating fast charging and discharging of the battery and improving the performance of the battery. Specifically, the resistivity of the negative electrode may be, but is not limited to, 0.1 Ω·cm, 0.5 Ω·cm, 0.9 Ω·cm, 1 Ω·cm, 1.2 Ω·cm, 1.5 Ω·cm, 1.8 Ω·cm, 2 Ω·cm, etc. In an embodiment of the present application, the resistivity of the negative electrode may be between 0.1 Ω·cm and 1.8 Ω·cm. In another embodiment of the present application, the resistivity of the negative electrode may be between 0.1 Ω·cm and 1.5 Ω·cm.

In the present application, thicknesses of the negative electrode current collector and the negative electrode active material layer may be selected as required, and are not limited herein.

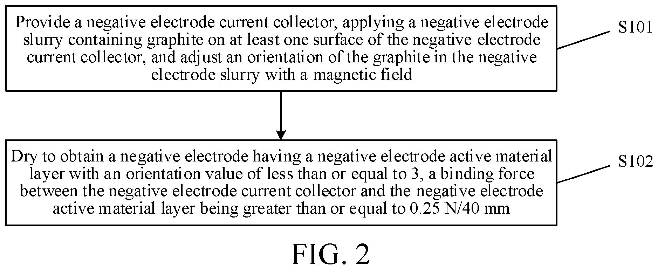

The present application further provides a negative electrode preparation method. FIG. 2 is a flowchart of a negative electrode preparation method according to an embodiment of the present application, including the following steps.

At S101, a negative electrode current collector is provided, a negative electrode slurry containing graphite is applied on at least one surface of the negative electrode current collector, and an orientation of the graphite in the negative electrode slurry is adjusted with a magnetic field.

At S102, drying is performed to obtain a negative electrode having a negative electrode active material layer with an orientation value of less than or equal to 3, a binding force between the negative electrode current collector and the negative electrode active material layer being greater than or equal to 0.25 N/40 mm.

In the negative electrode preparation method provided by the present application, the orientation of the graphite in the negative electrode slurry is changed under the action of a magnetic field, to improve the orientation degree of the graphite and realize a reasonable and orderly arrangement of the graphite to form a path which allows for easier ion and electron transport, thereby improving the migration rates of ions and electrons. In this way, the problems of impeded ion transport and negative electrode degradation transport obstruction and deterioration of the negative electrode caused by the parallel layered arrangement structure of the graphite can be alleviated, and the migration rates of ions and electrons are improved while ensuring that the binding force between the negative electrode active material layer and the negative electrode current collector is greater than or equal to 0.25 N/40 mm. This is conducive to the use of the negative electrode in a battery to improve the charging and discharging rates, cycling capacity retention rate, and service life of the battery.

In an embodiment of the present application, the negative electrode current collector includes a first surface and a second surface opposite to the first surface, the magnetic field is arranged on one side of the first surface and/or the second surface, and an angle between a magnetic moment direction of the magnetic field and the negative electrode current collector is between 10° and 90°. In the present application, the angle between the magnetic moment direction of the magnetic field and the surface of the negative electrode current collector is controlled to be between 10° and 90° (such as 20°, 30°, 40°, 50°, 60°, 70°, 75°, 80° or 90°, etc.), so that after the negative electrode slurry is applied on the negative electrode current collector, the graphite in the negative electrode slurry can be oriented under the action of the magnetic field. In this way, directional induction is realized, and the negative electrode active material layer with smooth ion transport and electron transport paths are obtained.

In the present application, the magnetic field may be, but is not limited to, generated by a magnetic field device. The magnetic field device may be, but is not limited to, an electromagnet, a permanent magnet, or the like, and may be selected as required. In an embodiment of the present application, the magnetic field device may be arranged on a side of the first surface facing away from the second surface, and spaced apart from the first surface; and/or the magnetic field device may be arranged on a side of the second surface facing away from the first surface, and spaced apart from the second surface.

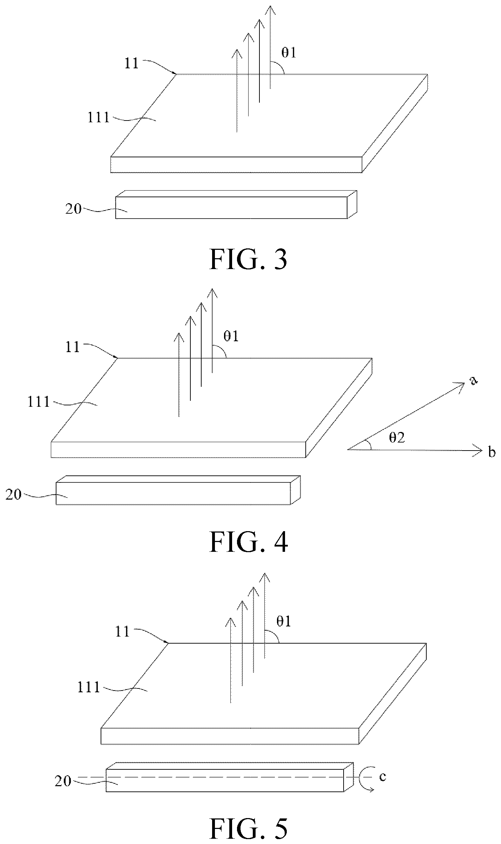

FIG. 3 is a schematic diagram of a negative electrode current collector and a magnetic field according to an embodiment of the present application. The negative electrode current collector 11 includes a first surface 111 and a second surface opposite to the first surface. An arrow indicates a magnetic moment direction of a magnetic field. The magnetic field may be generated by a magnetic field device 20. An angle between the magnetic moment direction of the magnetic field and the first surface is defined as θ1. In an embodiment of the present application, the angle between the magnetic moment direction of the magnetic field and the first surface is between 30° and 90°, which is beneficial to further optimizing the arrangement mode of the graphite and improving the performance of the negative electrode. In another embodiment of the present application, the angle between the magnetic moment direction of the magnetic field and the first surface is between 40° and 80°. In still another embodiment of the present application, the angle between the magnetic moment direction of the magnetic field and the first surface is between 60° and 90°, which can further achieve a vertical arrangement of the graphite and reduce the tortuosity of the negative electrode to optimize the transport path of ions in a thickness direction of the negative electrode, thereby further improving the performance of the negative electrode.

In an embodiment of the present application, the magnetic field undergoes at least one of reciprocating motion and rotational motion. In other words, the magnetic field may undergo reciprocating motion and/or rotational motion while keeping the angle between the magnetic moment direction of the magnetic field and the first surface to be between 10° and 90°, thereby further improving the arrangement of the graphite and improving the usage performance of the negative electrode. The magnetic field may undergo reciprocating motion, undergo rotational motion, or undergo reciprocating motion and rotational motion. In an embodiment of the present application, the angle between the movement direction of the reciprocating motion and the extending direction of the negative electrode current collector is between 0° and 90° (for example, 10°, 20°, 30°, 40°, 45°, 50°, 60°, 70°, 80°, or 90°, etc.). It can be understood that the extending direction of the negative electrode current collector is a length direction of the negative electrode current collector. Through the reciprocating motion, the arrangement angle of the graphite can be improved, and a diffusion path of ions parallel to the negative electrode current collector and a diffusion path of ions in the electron transport direction can be further optimized, thereby improving the performance of the negative electrode.

FIG. 4 is a schematic diagram of a negative electrode current collector and a magnetic field according to another embodiment of the present application. The magnetic field may be generated by a magnetic field device 20. The magnetic field device 20 reciprocates in a direction indicated by an arrow a. The direction indicated by the arrow a is parallel to the first surface 111. A direction indicated by an arrow b is the extending direction of the negative electrode current collector 11. The angle between the movement direction of the reciprocating motion and the extending direction of the negative electrode current collector 11 is defined as θ2. In an embodiment of the present application, the angle between the movement direction of the reciprocating motion and the extending direction of the negative electrode current collector is between 10° and 80°. In another embodiment of the present application, the angle between the movement direction of the reciprocating motion and the extending direction of the negative electrode current collector is between 30° and 90°. In still another embodiment of the present application, the angle between the movement direction of the reciprocating motion and the extending direction of the negative electrode current collector is between 40° and 90°. In still another embodiment of the present application, the angle between the movement direction of the reciprocating motion and the extending direction of the negative electrode current collector is between 50° and 90°.

In the present application, the uniformity of distribution of the graphite can be improved through rotational motion. The rotational motion is rotation along an axis. In a specific embodiment, the magnetic field is generated by the magnetic field device, and the magnetic field device may rotate along a central axis of the magnetic field device, so that the magnetic field undergoes rotational motion. Of course, in some other embodiments, the magnetic field device may rotate in other axial directions. FIG. 5 is a schematic diagram of a negative electrode current collector and a magnetic field according to still another embodiment of the present application. The magnetic field may be generated by a magnetic field device 20. The magnetic field device 20 rotates along a central axis c of the magnetic field device 20. In an embodiment of the present application, a rotation speed of the magnetic field device may be between 10 r/min and 60 r/min. Specifically, the rotation speed of the magnetic field device may be, but is not limited to, 15 r/min, 20 r/min, 25 r/min, 30 r/min, 35 r/min, 40 r/min, 45 r/min, or 50 r/min, etc.

In an embodiment of the present application, an intensity of the magnetic field is between 0.1 T and 2 T, which can not only provide directional induction for the graphite to improve the orientation of the graphite, but also reduce the difficulty of preparation without affecting the fluid in the negative electrode, so that a negative electrode having excellent performance can be obtained. Specifically, the intensity of the magnetic field may be, but is not limited to, 0.1 T, 0.2 T, 0.3 T, 0.5 T, 0.8 T, 0.9 T, 1 T, 1.2 T, 1.5 T, 1.7 T, or 2 T, etc. In an embodiment, the intensity of the magnetic field may be 0.2 T to 2 T. In another embodiment, the intensity of the magnetic field may be between 0.5 T and 2 T. In still another embodiment, the intensity of the magnetic field may be between 0.2 T and 1 T. In still another embodiment, the intensity of the magnetic field may be between 0.8 T and 2 T, which is conducive to further improving the performance of the negative electrode.

In the present application, the graphite in the negative electrode slurry is oriented under the action of the magnetic field, i.e., the graphite moves under the action of electric charges, thereby obtaining a negative electrode with excellent performance. In an embodiment of the present application, a particle diameter D50 of the graphite may be between 1 µm and 30 µm, which facilitates the transport of ions and electrons and reduces side reactions between the graphite and the electrolyte solution. In an embodiment of the present application, the degree of graphitization of graphite is greater than or equal to 60%, thereby improving the cycle performance and energy density of the negative electrode and the battery.

In an embodiment of the present application, to improve the electrical conductivity of the negative electrode, the negative electrode slurry preferably further includes a conductive agent. In another embodiment of the present application, the negative electrode slurry may include an auxiliary agent to further improve the performance of the negative electrode. In an embodiment of the present application, the auxiliary agent includes at least one of a binder and a dispersant. In an embodiment, the content in percentage by weight of the binder in the negative electrode slurry may be less than or equal to 2%. Specifically, the content in percentage by weight of the binder in the negative electrode slurry may be, but is not limited to, 0.1%, 0.5%, 0.9%, 1%, 1.5%, 1.8%, 2%, etc. For example, the content in percentage by weight of the binder in the negative electrode slurry may be between 0.5% and 2%. In an embodiment, the content in percentage by weight of the dispersant in the negative electrode slurry may be less than or equal to 2%. Specifically, the content in percentage by weight of the dispersant in the negative electrode slurry may be, but is not limited to, 0.1%, 0.5%, 0.9%, 1%, 1.5%, 1.8%, 2%, etc. For example, the content in percentage by weight of the dispersant in the negative electrode slurry may be between 0.5% and 2%. In still another embodiment of the present application, the negative electrode slurry may include a solvent, to adjust the viscosity of the negative electrode slurry to facilitate the application of the negative electrode slurry. Specifically, the solvent may be, but is not limited to, at least one of water, ethanol, toluene, xylene, anisole, acetonitrile, heptane, decane, ethyl acetate, ethyl propionate, butyl butyrate, N-methylpyrrolidone, acetone, and the like.

In an embodiment of the present application, the viscosity of the negative electrode slurry is between 1500 mPa·s and 5000 mPa·s. The negative electrode slurry has a suitable viscosity, which is beneficial to the uniform dispersion of the graphite and the conductive agent, and is also beneficial to the application and drying of the negative electrode slurry on the surface of the negative electrode current collector. Specifically, the viscosity of the negative electrode slurry may be, but is not limited to, 1500 mPa·s, 2000 mPa·s, 2500 mPa·s, 3000 mPa·s, 3500 mPa·s, 4000 mPa·s, 4500 mPa·s, 5000 mPa·s, etc.

In an embodiment of the present application, the negative electrode active material is applied on the surface of the negative electrode current collector at between 10°C and 40°C (such as 20°C, 25°C, 30°C, 35°C, 40°C, etc.), which is beneficial to leveling of the negative electrode slurry and the effect of the magnetic field on the graphite.

In an embodiment of the present application, a duration of action of the magnetic field on the negative electrode slurry is between 1 min and 30 min, to obtain graphite with excellent orientation and a negative electrode with excellent performance. Specifically, the duration of action of the magnetic field on the negative electrode slurry may be, but is not limited to, 1 min, 5 min, 10 min, 15 min, 20 min, 25 min, or 30 min, etc. It can be understood that when the magnetic field is applied to the negative electrode slurry, positive charges on the negative electrode current collector act on the negative electrode slurry, i.e., a duration of action of charges on the negative electrode slurry is between 1 min and 30 min. In an embodiment of the present application, the duration of action of the magnetic field on the negative electrode slurry may be between 1 min and 10 min. In another embodiment of the present application, the duration of action of the magnetic field on the negative electrode slurry may be between 5 min and 20 min. In an embodiment of the present application, when the negative electrode slurry is in the magnetic field, the temperature is between 40°C and 60°C (for example, 40°C, 45°C, 50°C, 55°C, 60°C, etc.), to provide a pre-drying effect to facilitate the attachment of the negative electrode slurry to the surface of the negative electrode current collector and the fixation of the graphite after directional induction. In other words, the negative electrode slurry is pre-dried at a temperature of 40°C to 60°C for 1 min to 30 min.

In the present application, the magnetic field may be applied after the negative electrode slurry is arranged on the surface of the negative electrode current collector, or the negative electrode slurry may be arranged after the magnetic field is arranged on one side of the negative electrode current collector. In an embodiment of the present application, the negative electrode current collector may be placed in a transfer device, and the negative electrode current collector may move with a movement of the transfer device. During the movement, the negative electrode slurry is applied on the surface of the negative electrode current collector, and at the same time, the magnetic field is arranged on one side of the negative electrode current collector. In the present application, the magnetic field may be arranged on one side of the first surface or the second surface. In an embodiment of the present application, the magnetic field may be arranged on one side of the second surface, so as not to affect the negative electrode slurry. For example, when the magnetic field device is used to generate the magnetic field, the magnetic field device is arranged on one side of the second surface to avoid contact with the negative electrode slurry. This is more conducive to the arrangement of the negative electrode slurry.

In an embodiment of the present application, the drying is performed at a temperature of 40°C to 200°C for 2 min to 60 min. In an embodiment of the present application, the drying includes pre-drying and final drying, thereby facilitating bonding of the negative electrode current collector and the negative electrode active material layer. In an embodiment of the present application, the final drying is performed at a temperature of 60°C to 200°C for 1 min to 30 min. This can cause the graphite to maintain the induced orientation, and is also conducive to the bonding of the negative electrode current collector and the negative electrode active material layer, thereby improving the performance of the negative electrode. Specifically, the temperature of the final drying may be, but is not limited to, 10°C, 50°C, 70°C, 100°C, 130°C, 150°C, 180°C, 200°C, etc., and the time of the final drying may be, but is not limited to, 1 min, 5 min, 10 min, 15 min, 20 min, 25 min, 30 min, etc. In an embodiment, the final drying is performed at a temperature of 60°C to 180°C for 5 min to 25 min. In another embodiment, the final drying is performed at a temperature of 140°C to 180°C for 5 min to 15 min.

In an embodiment of the present application, the method further includes rolling after the drying. Through the rolling, a thickness of the negative electrode is controlled, the compaction density and binding force are improved, and the arrangement order of the graphite is further improved. In an embodiment of the present application, a pressure of the rolling ranges from 2 t (ton) to 35 t, and a speed of the rolling ranges from 0.5 m/s to 2 m/s. Specifically, the pressure of the rolling may be, but is not limited to, 2 t, 5 t, 9 t, 10 t, 12 t, 15 t, 20 t, 25 t, 30 t, 35 t, etc., and the speed of the rolling may be, but is not limited to, 0.5 m/s, 1 m/s, 1.5 m/s, 1.8 m/s, 2 m/s, etc.

In an embodiment of the present application, the negative electrode slurry further contains a conductive agent, and the negative electrode current collector is positively charged before the drying, to cause a distribution density of the conductive agent on a side that is away from the negative electrode current collector to be less than a distribution density of the conductive agent on a side that is close to the negative electrode current collector. In this embodiment, a magnetic field and an electric field are used in combination. Under the action of the magnetic field, the orientation mode where the graphite in the negative electrode slurry is parallel or approximately parallel to the negative electrode current collector is changed, and the angle between the graphite and the negative electrode current collector is increased, to improve the orientation degree of the graphite and realize a reasonable and orderly arrangement of the graphite to form a path which allows for easier ion and electron transport, thereby improving the migration rates of ions and electrons. The electric field is applied to the negative electrode current collector to make the negative electrode current collector be positively charged. Under the action of the electric field, the conductive agent is attracted to move toward one side of the negative electrode current collector, so that the negative electrode active material layer close to the side of the negative electrode current collector has better conductivity, thereby reducing the resistivity of the negative electrode. In addition, under the action of charges, the graphite also moves, so that the compactness of the arrangement of the graphite is improved, and liquid phase mass transfer pores are optimized. Under the action of the magnetic field and the electric field, the conductive agent and the graphite are in closer contact on the side close to the negative electrode current collector, and the contact surfaces between the conductive agent and the graphite and the negative electrode current collector are larger, so that the binding force between the negative electrode active material layer and the negative electrode current collector is increased, and the binding reliability is improved. This is conducive to the use of the negative electrode in a battery to improve the charging and discharging rates, cycling capacity retention rate, and service life of the battery.

In the present application, the method of applying an electric field to the negative electrode current collector is not limited as long as the negative electrode current collector can be positively charged. In an embodiment of the present application, the negative electrode current collector may be connected to a positive electrode of a power supply, so that the negative electrode current collector is positively charged. In another embodiment of the present application, the negative electrode current collector is connected to a DC electric field, so that the negative electrode current collector is positively charged. In an embodiment of the present application, a rolling conductive device may be connected to the negative electrode current collector, so that the negative electrode current collector is positively charged. In a specific embodiment, the rolling conductive device includes two rollers, the negative electrode current collector is sandwiched by the two rollers in a thickness direction of the negative electrode current collector, and the rollers apply a voltage to the negative electrode current collector to positively charge the negative electrode current collector.

In an embodiment of the present application, the voltage of the negative electrode current collector is between 0.1 V and 120 V. This can cause the conductive agent to move toward the negative electrode current collector while ensuring the distribution of the conductive agent on the side away from the negative electrode current collector in the negative electrode active material layer, and is also conducive to achieving a more compact arrangement of the graphite and improving the compaction density and rate performance. Specifically, the voltage of the negative electrode current collector may be, but is not limited to, 0.1 V, 1 V, 5 V, 10 V, 15 V, 20 V, 25 V, 30 V, 50 V, 75 V, 90 V, 100 V, 110 V, 115 V, etc. In an embodiment of the present application, the voltage of the negative electrode current collector is between 5 V and 35 V. This further reduces the difficulty of preparation, ensures the safety of preparation, and is conducive to further optimizing the distribution of the graphite and the conductive agent in the negative electrode active material layer, thereby further improving the electrochemical performance of the negative electrode. In another embodiment of the present application, the voltage of the negative electrode current collector is between 10 V and 50 V. In still another embodiment of the present application, the voltage of the negative electrode current collector is between 10 V and 80 V. In an embodiment, the negative electrode current collector is connected to a DC electric field, and is maintained at a voltage of between 0.1 V and 120 V. In the present application, during the preparation of the negative electrode, the voltage of the negative electrode current collector remains stable, which is more conducive to improving the performance of the negative electrode.

In the present application, the negative electrode current collector may be positively charged in any step prior to drying. For example, it is feasible to apply the magnetic field and positively charge the negative electrode current collector after the negative electrode slurry is arranged on the surface of the negative electrode current collector, or arrange the negative electrode slurry after the magnetic field is arranged on one side of the negative electrode current collector and the negative electrode current collector is positively charged. In an embodiment of the present application, the negative electrode current collector may be placed in a transfer device, and the negative electrode current collector may move with a movement of the transfer device. During the movement, the negative electrode slurry is applied on the surface of the negative electrode current collector, and at the same time, the negative electrode current collector is connected to and positively charged by a power supply, and the magnetic field is arranged on one side of the negative electrode current collector.

Under the same preparation conditions, compared with a negative electrode prepared without applying a magnetic field or without applying a magnetic field and an electric field, the resistivity of the negative electrode produced by applying the magnetic field or applying the magnetic field and the electric field in the present application is between 5% and 60% lower than that of an ordinary electrode prepared without applying a magnetic field, so that the electrical conductivity of the negative electrode and the battery is greatly improved. The preparation method provided by the present application has simple operation, controllable process conditions, and low energy consumption, and improves the ion and electron diffusion capabilities, the binding force, resistivity, and the like of the negative electrode, to obtain a negative electrode with excellent performance. This can improve the charging and discharging rates and high-rate cycling capacity retention rate of the battery, is especially beneficial to the performance of the battery with high area density and compaction, and breaks through the bottlenecks of the charging and discharging rates and capacity of conventional batteries.

In the present application, the ions may include, but are not limited to, one of lithium ion, sodium ion, potassium ion, magnesium ion, and aluminum ion.

The present application further provides a battery, including the negative electrode according to any one of the above embodiments and a positive electrode. The charging and discharging rates, the cycling capacity retention rate, and the service life of the battery having the negative electrode are excellent, which is beneficial to the use of battery in an electrical device. The battery may be, but is not limited to, a power battery (such as a lithium-ion power battery), an energy storage battery (such as a solar battery), etc.

In an embodiment of the present application, the battery further includes an electrolyte solution. In an embodiment of the present application, the positive electrode is at least partially immersed in the electrolyte solution, and the negative electrode is at least partially immersed in the electrolyte solution, to ensure normal operation of the battery. In an embodiment of the present application, the electrolyte solution includes a lithium salt and an organic solvent. Specifically, the lithium salt may include, but is not limited to, at least one of lithium hexafluorophosphate, lithium hexafluoroarsenate, lithium perchlorate, lithium hexafluoroborate, lithium bis(trifluoromethanesulphonyl)imide, lithium trifluoromethanesulfonate, LiC(CF₃SO₃)₂, and LiN(C₄F₉SO₂)(CF₃SO₃). The organic solvent may include, but is not limited to, at least one of an ether-based solvent, a nitrile-based solvent, a cyanoester-based solvent, a fluoroester-based solvent, a tetrazolium-based solvent, a fluorosulfonyl-containing solvent, a chlorosulfonyl-containing solvent, a nitro-containing solvent, a carbonate-based solvent, a dicarbonate-based solvent, a nitrate-based solvent, a fluoroamide-based solvent, a diketone-based solvent, an azole-based solvent, and a triazine-based solvent. For example, the organic solvent may include, but is not limited to, ethylene carbonate, propylene carbonate, diethyl carbonate, ethyl methyl carbonate, and dimethyl carbonate.

In an embodiment of the present application, the battery further includes a separator arranged between the positive electrode and the negative electrode. In the present application, the positive electrode and the separator are not particularly limited, and materials that can be used as positive electrodes and separators of batteries in the art may be used, but the present application is not limited thereto.

The present application further provides an electrical device, including the battery according to any one of the above embodiments. The electrical device can realize fast charging and discharging, meet usage requirements, has a long service life, and therefore has improved product competitiveness. Specifically, the electrical device may be a vehicle, an electronic device, an energy storage system, etc. The battery may be arranged in the electrical device in the form of a cell, a battery module, a battery pack, or the like.

The effects of the technical solutions of the present application will be further described below through specific examples.

### Example 1

Graphite (having a particle size D50 of 9.5 µm, the degree of graphitization of graphite is 85%), carbon black, styrene-butadiene rubber, carboxymethyl cellulose, and water are mixed and uniformly stirred at 25°C to obtain a negative electrode slurry. In the negative electrode slurry, the content in percentage by weight of the graphite (artificial graphite) is 96%, the content in percentage by weight of the carbon black is 1.5%, the content in percentage by weight of the styrene-butadiene rubber is 1%, and the content in percentage by weight of the carboxymethyl cellulose is 1%. The above mass contents are based on solids.

The negative electrode slurry and a copper foil are placed in a continuous coating apparatus, to coat the negative electrode slurry on a first surface of the copper foil. At the same time, a voltage of 25 V is applied to the copper foil to make the copper foil be positively charged, and a magnetic field device is arranged at a coating outlet position of the negative electrode slurry. The magnetic field device is arranged on a side of a second surface of the copper foil opposite to the first surface. An intensity of the magnetic field is 0.8 T. An angle between a magnetic moment direction of the magnetic field and the first surface of the copper foil is 90°. The magnetic field device performed reciprocating motion, and an angle between a movement direction of the reciprocating motion and an extending direction (i.e., moving direction) of the copper foil is 90°, so as to keep the magnetic field uniform and stable. The negative electrode slurry applied is passed through the magnetic field region for 10 min, and the temperature of the negative electrode slurry in the magnetic field is 40°C. Then, the negative electrode slurry is dried at 140°C for 10 min, and rolled under at a pressure of 10 t and a rolling speed of 0.5 m/s to obtain a negative electrode.

### Example 2

This example is substantially the same as Example 1 except that the voltage applied to the copper foil is 5 V.

### Example 3

This example is substantially the same as Example 1 except that the voltage applied to the copper foil is 35 V.

### Example 4

This example is substantially the same as Example 1 except that the intensity of the magnetic field is 0.2 T.

### Example 5

This example is substantially the same as Example 1 except that the intensity of the magnetic field is 2 T.

### Example 6

This example is substantially the same as Example 1 except that the angle between the magnetic moment direction of the magnetic field and the first surface is 10°.

### Example 7

This example is substantially the same as Example 1 except that the angle between the magnetic moment direction of the magnetic field and the first surface is 30°.

### Example 8

This example is substantially the same as Example 1 except that the angle between the magnetic moment direction of the magnetic field and the first surface is 60°.

### Example 9

This example is substantially the same as Example 1 except that the angle between the movement direction of the reciprocating motion and the extending direction of the copper foil is 10°.

### Example 10

This example is substantially the same as Example 1 except that the angle between the movement direction of the reciprocating motion and the extending direction of the copper foil is 40°.

### Example 11

This example is substantially the same as Example 1 except that the magnetic field device did not perform reciprocating motion but rotated about its own central axis at a rotation speed of 25 r/min.

### Example 12

This example is substantially the same as Example 1 except that the magnetic field device performed rotational motion about its own central axis at a rotation speed of 50 r/min while performing reciprocating motion.

### Example 13

This example is substantially the same as Example 1 except that the negative electrode slurry applied is passed through the magnetic field region for 1 min.

### Example 14

This example is substantially the same as Example 1 except that the particle size D50 of the graphite is 19.5 µm.

### Example 15

This example is substantially the same as Example 1 except that the intensity of the magnetic field is 3 T and a voltage of 0.3 V is applied to the copper foil.

### Example 16

This example is substantially the same as Example 1 except that the rolling pressure is 45 t.

### Example 17

This example is substantially the same as Example 1 except that no voltage is applied to the copper foil.

### Example 18

The negative electrode slurry is substantially the same as Example 1 except that the negative electrode slurry is composed of 98% of graphite in percentage by weight, 1% of styrene-butadiene rubber in percentage by weight, 1% of carboxymethyl cellulose in percentage by weight, and the balance of water.

### Comparative Example 1

This example is substantially the same as Example 1 except that the magnetic field device is not provided.

### Comparative Example 2

This example is substantially the same as Example 1 except that no voltage is applied to the copper foil and the magnetic field device is not provided.

### Comparative Example 3

This example is substantially the same as Example 1. The magnetic field is adjusted, so that the orientation value of the obtained negative electrode active material layer is 2.5, and the bonding force between the negative electrode current collector and the negative electrode active material layer is 0.24 N/40 mm.

### Performance test

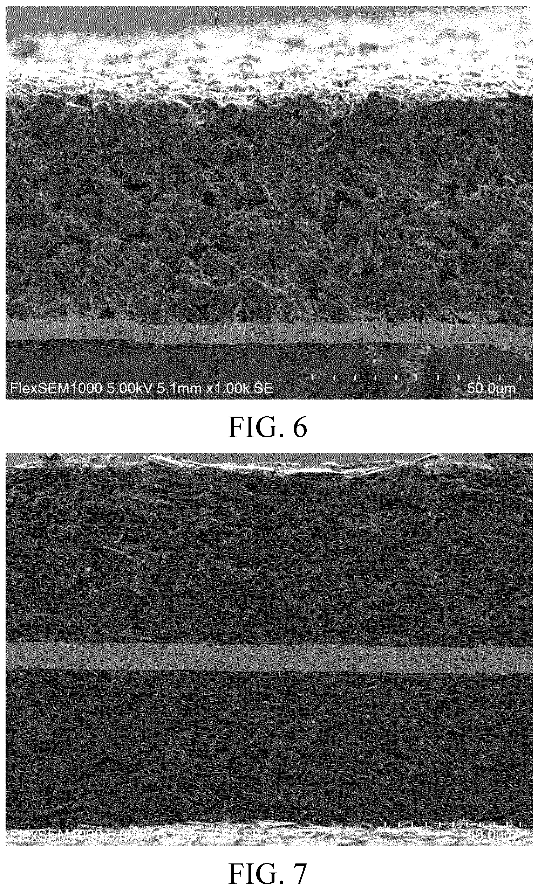

Negative electrodes prepared in Example 1 and Comparative Example 2 are tested by electron microscopy. FIG. 6 is an electron microscope cross-sectional view of the negative electrode prepared in Example 1, and FIG. 7 is an electron microscope cross-sectional view of the negative electrode prepared in Comparative Example 2. As can be seen, the graphite is stacked in a vertical direction or an inclined direction in the negative electrode of Example 1, and the graphite is stacked in a horizontal direction in the negative electrode of Comparative Example 2. In addition, similar to Comparative Example 2, an electron micrograph of the negative electrode prepared in Comparative Example 1 showed that the graphite is stacked in the horizontal direction in the negative electrode. Therefore, the preparation method provided in the present application can modify the orientation mode of the graphite, thereby improving the performance of the negative electrode.

The area density, compaction density, orientation value, binding force, and resistivity of the negative electrodes prepared in the above examples and comparative examples are tested under the following test conditions. The results are shown in Table 1.

Area density test: Samples are taken in the negative electrode and the negative electrode current collector foil using a 1.5 cm diameter cutter, and weighed with an electronic scale. The area density of the negative electrode is calculated in g/m².

Compaction density test: The average thickness of the negative electrode is measured and calculated using a micrometer. By calculating the ratio of the area density to the thickness, the compaction density of the negative electrode can be obtained, in g/cm³.

Orientation value (OI Value) test: The 004 peak intensity and the 110 peak intensity of the negative electrode are measured by XRD test (with a scanning range of 5° to 90°, a voltage of 1 mv, and a scanning speed of 0.5°/min), so as to calculate the OI value of the negative electrode active material layer.

Binding force (peel force) test: A transparent adhesive is evenly pasted on one side of the negative electrode, one end is torn out and fixed on a test jig, and a force used to peel the adhesive tape off the electrode is measured with a force gauge. The length measured is 40 mm. As such, the binding force between the negative electrode current collector and the negative electrode active material layer is obtained.

Resistivity test: The electrode is cut into a size of 40 mm×100 mm and put into an electrode resistance meter testing device for testing. The pressure is set to 400 kg, and the start button of the equipment is pressed to perform automatic testing to obtain the resistivity of the negative electrode.

**Table 1 Test result of performance of negative electrode**

| | Orientation value | Binding force (N/40 mm) |
|---|---|---|
| Example 1 | 0.09 | 2.0 |
| Example 2 | 0.32 | 1.04 |
| Example 3 | 0.36 | 1.92 |
| Example 4 | 0.76 | 1.45 |
| Example 5 | 0.09 | 0.40 |
| Example 6 | 2.89 | 0.53 |
| Example 7 | 1.33 | 0.68 |
| Example 8 | 0.56 | 1.32 |
| Example 9 | 0.22 | 1.19 |
| Example 10 | 0.25 | 1.08 |
| Example 11 | 0.36 | 1.11 |
| Example 12 | 0.44 | 1.03 |
| Example 13 | 0.61 | 1.54 |
| Example 14 | 0.89 | 1.65 |
| Example 15 | 0.04 | 0.34 |
| Example 16 | 0.98 | 0.69 |
| Example 17 | 0.83 | 0.30 |
| Example 18 | 0.6 | 0.25 |
| Comparative Example 1 | 6.7 | 0.32 |
| Comparative Example 2 | 20.47 | 0.23 |
| Comparative Example 3 | 2.5 | 0.24 |

The negative electrodes prepared in the above examples and comparative examples are cut to obtain negative electrodes having an area density of 230±23 g/m², matching a lithium iron phosphate positive electrode having a corresponding size and an area density of 500±50 g/m² (where the mass ratio of lithium iron phosphate, conductive carbon black, and PVDF is 96:2:2). 1 mol of LiPF₆ is dissolved in 1 L of an organic solvent (where the volume ratio of ethylene carbonate and diethyl carbonate is 1: 1) to obtain an electrolyte solution. In a glove box, the positive electrode, the separator, and the negative electrode are alternately stacked under an argon atmosphere, and the electrolyte solution is injected to prepare a soft pack battery. The battery is designed to have a capacity of 1.8 Ah. The prepared battery is tested as follows. The results are shown in Table 2.

DC internal resistance test: The above batteries are adjusted to 50% SOC at 25°C, and then respectively charged at 1.5C for 30s. The voltage drop of each battery is recorded, and the DC impedance DCIR is calculated.

Specific discharge capacity ratio: The change of the discharge gram capacity of the above batteries respectively at different rates of 0.2C, 2C, and 5C with the number of cycles is tested at 25°C. The voltage range is 2.0 V to 3.8 V. The ratio of the first cycle discharge capacity at a rate of 5C to the first cycle discharge capacity at 0.2C (discharge ratio at 5C/0.2C) is calculated, and the ratio of the battery capacity after 1000 charging and discharging cycles of the battery at a rate of 2C to the discharge capacity of the first cycle at 0.2C (capacity after 1000 cycles at 2C/0.2C) is calculated. The two ratios may be used to evaluate the high-rate charging and discharging performance of the battery.

Liquid-phase diffusion impedance test: The negative electrode, the separator, and the negative electrode are stacked and formed into a symmetrical battery. The AC impedance of the symmetrical battery is tested and analyzed at a frequency of 0.02 Hz to 200000 Hz and a voltage of 5 V, and is used as liquid-phase diffusion impedance.

**Table 2 Test result of performance of battery**

| | Liquid-phase diffusion impedance (Ω) | Discharge ratio at 5C/0.2C (%) | Capacity after 1000 cycles at 2C/0.2C (%) |
|---|---|---|---|
| Example 1 | 0.71 | 76.8 | 93.2 |
| Example 2 | 0.94 | 71.5 | 86.3 |
| Example 3 | 0.95 | 71.9 | 87.6 |
| Example 4 | 1.13 | 69.6 | 88.6 |
| Example 5 | 0.72 | 75.3 | 90.1 |
| Example 6 | 1.84 | 59.2 | 83.9 |
| Example 7 | 1.36 | 68.4 | 86.5 |
| Example 8 | 0.89 | 73.2 | 90.5 |
| Example 9 | 1.06 | 72.1 | 86.5 |
| Example 10 | 1.02 | 70.8 | 85.7 |
| Example 11 | 0.98 | 70.6 | 85.9 |
| Example 12 | 0.94 | 71.2 | 86.1 |
| Example 13 | 1.09 | 69.3 | 85.1 |
| Example 14 | 1.46 | 64.3 | 83.4 |
| Example 15 | 0.75 | 70.5 | 82.1 |
| Example 16 | 1.83 | 61.8 | 83 |
| Example 17 | 1.47 | 59.1 | 80.7 |
| Example 18 | 1.55 | 56.1 | 80.0 |
| Comparative Example 1 | 1.69 | 52.8 | 76.8 |
| Comparative Example 2 | 1.84 | 48.3 | 75.6 |
| Comparative Example 3 | 1.81 | 56.8 | 77.3 |

It can be seen that in Comparative Example 1, no magnetic field is applied, so the orientation degree of the graphite cannot be effectively adjusted, and the performance of the negative electrode is affected. In Comparative Example 2, neither the magnetic field nor the electric field is applied, so the orientation degree of the graphite cannot be effectively adjusted, and the dense arrangement of the graphite in the negative electrode active material layer cannot be adjusted, resulting in poor performance of the obtained negative electrode. Although the orientation degree of the negative electrode active material layer in Comparative Example 3 is suitable, the binding force between the negative electrode active material layer and the negative electrode current collector is weak, resulting in poor overall performance of the negative electrode. In the embodiments of the present application, the application of the magnetic field can improve the orientation degree of the graphite, reduce the tortuosity of the negative electrode, optimize the distribution of the conductive agent, and improve the binding force between the negative electrode current collector and the negative electrode active material layer, thereby obtaining a negative electrode with excellent performance, which is conducive to improving the rate performance of the battery and facilitating the use of the battery. It can be seen through SEM that in the negative electrode prepared in Example 1, the distribution density of the conductive agent gradually increases in the direction from the negative electrode active material layer to the negative electrode current collector, while in the negative electrode prepared in Example 17, the conductive agent is roughly uniformly distributed in the negative electrode active material. It can be seen that through the arrangement of the electric field, the distribution density of the conductive agent can be further improved, the resistivity of the negative electrode can be further reduced, and the orientation of the graphite can be further improved, to improve the performance of the battery. Compared with Example 18, the comprehensive performance of the battery in Example 1 is improved, indicating that the addition of the conductive agent can further improve the electrochemical performance of the negative electrode and the battery.

While exemplary embodiments of the present application have been described above, the scope of the present application is not limited thereto. It should be appreciated that some improvements and modifications can be made by those skilled in the art without departing from the technical principles of the present application, which are also contemplated to be within the scope of the present application.

## Claims

1. A negative electrode, comprising a negative electrode current collector and a negative electrode active material layer arranged on a surface of the negative electrode current collector, the negative electrode active material layer comprising graphite, an orientation value of the negative electrode active material layer being less than or equal to 3, and a binding force between the negative electrode current collector and the negative electrode active material layer being greater than or equal to 0.25 N/40 mm.

2. The negative electrode according to claim 1, wherein the orientation value of the negative electrode active material layer is between 0.06 and 3; and/or the binding force between the negative electrode current collector and the negative electrode active material layer is between 0.25 N/40 mm and 2.8 N/40 mm.

3. The negative electrode according to claim 1 or 2, wherein the negative electrode active material layer further comprises a conductive agent, and a distribution density of the conductive agent on a side that is away from the negative electrode current collector is less than a distribution density of the conductive agent on a side that is close to the negative electrode current collector.

4. The negative electrode according to claim 3, wherein the distribution density of the conductive agent gradually increases in a direction from the negative electrode active material layer to the negative electrode current collector.

5. The negative electrode according to claim 3 or 4, wherein the weight of the conductive agent in the negative electrode active material layer is between 0.1% and 6.7% of the total weight of the negative electrode active material layer.

6. The negative electrode according to any one of claims 1 to 5, wherein a resistivity of the negative electrode is between 0.1 Ω·cm and 2 Ω·cm.

7. The negative electrode according to any one of claims 1 to 6, wherein a weight of the graphite in the negative electrode active material layer is greater than or equal to 80% of the total weight of the negative electrode active material layer; and/or
a particle diameter D50 of the graphite is between 1 µm and 30 µm.

8. A negative electrode preparation method, comprising:
providing a negative electrode current collector, applying a negative electrode slurry containing graphite on at least one surface of the negative electrode current collector, and adjusting an orientation of the graphite in the negative electrode slurry with a magnetic field; and
performing drying to obtain a negative electrode having a negative electrode active material layer with an orientation value of less than or equal to 3, a binding force between the negative electrode current collector and the negative electrode active material layer being greater than or equal to 0.25 N/40 mm.

9. The preparation method according to claim 8, wherein the negative electrode current collector comprises a first surface and a second surface opposite to the first surface, the magnetic field is arranged on one side of the first surface and/or the second surface, and an angle between a magnetic moment direction of the magnetic field and the negative electrode current collector is between 10° and 90°.

10. The preparation method according to claim 8 or 9, wherein the magnetic field undergoes at least one of a reciprocating motion and a rotating motion, and an angle between a movement direction of the reciprocating motion and an extending direction of the negative electrode current collector is between 0° and 90°.

11. The preparation method according to any one of claims 8 to 10, wherein an intensity of the magnetic field is between 0.1 T and 2 T.

12. The preparation method according to any one of claims 8 to 11, wherein the negative electrode slurry further contains a conductive agent, and the negative electrode current collector is positively charged before drying, to cause a distribution density of the conductive agent on a side that is away from the negative electrode current collector to be less than a distribution density of the conductive agent on a side that is close to the negative electrode current collector; and
a voltage of the negative electrode current collector is between 0.1 V and 120 V.

13. The preparation method according to any one of claims 8 to 12, wherein drying is performed at a temperature of 40°C to 200°C for 2 min to 60 min; and/or further comprising rolling after drying, with a rolling pressure of 2 t to 35 t and a rolling speed of 0.5 m/s to 2 m/s.

14. A battery, comprising the negative electrode according to any one of claims 1 to 7 or a negative electrode prepared by the preparation method according to any one of claims 8 to 13, and a positive electrode.

15. An electrical device, comprising: the battery according to claim 14.
